# FASCICULE DE BREVET EUROPEEN

(11) **EP 2 326 986 B1**
(45) Date de publication et mention de la délivrance du brevet: **15.10.2014**
(21) Numéro de dépôt: 09784390.8
(22) Date de dépôt: 20.05.2009
(51) Int. Cl.: G02C 5/12

(54) **ENSEMBLE D'APPUI NASAL POUR LUNETTES ET LUNETTES LE COMPORTANT**
NASENHALTEBAUGRUPPE FÜR BRILLEN UND BRILLEN DAMIT
NOSE BEARING ASSEMBLY FOR SPECTACLES, AND SPECTACLES INCLUDING SAME

(30) Priorité: 26.09.2008 FR 0856486
(43) Date de publication de la demande: 01.06.2011
(73) Titulaire: Logo, 39400 Morez (FR)
(72) Inventeur: JACQUEMIN, Didier, F-39400 La Mouille (FR)
(74) Mandataire: Brungard, Yves Francois
(86) Numéro de dépôt international: PCT/FR2009/050945
(87) Numéro de publication internationale: WO 2010/034910

(56) Documents cités:
- WO-A-03/062904
- FR-A- 2 565 366
- FR-A- 2 757 279
- US-A- 4 600 279
- US-A- 4 792 222
- US-B1- 7 048 371

## Description

La présente invention concerne un ensemble d'appui nasal pour lunettes.

Un tel ensemble est destiné à être fixé sur une zone centrale desdites lunettes.

Il pourra être fixé directement sur les verres optiques ou solaires, sur le pont reliant les verres, ou encore sur une monture de cerclage de ceux-ci.

Chaque ensemble d'appui nasal, bien entendu au nombre de deux, est constitué par une plaquette destinée à venir en contact avec une aile du nez d'un utilisateur et supportée par un bras porte-plaquette relié aux lunettes, comme évoqué ci-dessus.

En fait, l'un des buts recherchés par l'invention est d'obtenir, à moindre coût, un ensemble d'appui nasal apte à s'auto-ajuster librement, selon un angle de face et un angle de dessus, dit « de chasse », par rapport aux axes vertical et horizontal du nez d'un utilisateur.

Il a déjà été proposé d'obtenir un tel pivotement selon les angles précités en articulant la plaquette sur son bras porte-plaquette, par l'intermédiaire d'une chape filetée portée par l'extrémité libre du bras porte-plaquette, sur laquelle est susceptible d'être fixée une patte percée rapportée sur la plaquette, la liaison entre la chape du bras porte-plaquette et la patte de la plaquette s'effectuant par l'intermédiaire d'une vis se vissant dans la chape filetée et traversant librement la patte de la plaquette, tout en lui donnant une liberté de pivotement selon les angles précités.

C'est ainsi que, selon l'art antérieur, l'ensemble d'appui nasal est constitué d'un bras porte-plaquette, d'une chape filetée, d'une vis, d'une patte de fixation et d'une plaquette. Cela revient à dire que cinq pièces sont nécessaires pour chaque côté, et donc dix pièces pour l'obtention d'un ensemble d'appui nasal complet.

Cette multiplicité augmente le prix de revient, tant au niveau des pièces à mettre en oeuvre qu'au niveau de la manutention pour les mettre en oeuvre.

Cela se traduit également par un encombrement important dans le sens latéral du porte-plaquette associé à la plaquette.

Un autre inconvénient réside dans le fait qu'il est difficile de bien positionner les plaquettes. De plus, les déformations successives du porte-plaquette peuvent le faire rompre au bout d'un certain temps. Enfin, ce système génère un nombre important de recoins dans lesquels peuvent s'amalgamer, au cours du temps, des impuretés rendant à terme inesthétique l'aspect des lunettes.

Il a été tenté de remédier à ces inconvénients en proposant des plaquettes en matière plastique, destinées à recouvrir une âme en métal d'un porte-plaquette. Cependant, ces plaquettes présentent l'inconvénient d'être très encombrantes et ne peuvent être utilisées sur tout type de lunettes.

Un autre système connu consiste à réaliser des plaquettes s'enfichant sur le porte-plaquette. La plaquette possède alors au moins une réservation dans laquelle le porte-plaquette vient se positionner, avec des points durs destinés à entrer en contact avec des excroissances du porte-plaquette, de manière à assurer un maintien suffisant.

De cette manière, il est possible de limiter le nombre de pièces, tout en pouvant positionner les plaquettes par rapport au nez. Mais l'inconvénient réside dans le fait que le bras porte-plaquette est introduit dans la plaquette selon quasiment toute sa longueur, ce qui ôte toute possibilité de souplesse de la plaquette. En fait, le bras porte-plaquette rigidifie la plaquette, sur toute sa longueur, ce qui est néfaste pour assurer un bon confort dans le porté de l'utilisateur.

Il a également été proposé, de manière à rendre de la souplesse aux plaquettes, de créer des lamelles sur celles-ci, venant directement en contact avec les ailes du nez de l'utilisateur. Mais ceci créée autant de points d'appui que d'ailettes présentes, pouvant provoquer une gêne chez l'utilisateur.

La présente invention a pour but de remédier à ces inconvénients et concerne à cet effet un ensemble d'appui nasal selon l'énoncé de la revendication indépendante 1.

De cette manière, la plaquette est rigidement maintenue sur le porte-plaquette, tout en offrant une zone souple et confortable, en contact avec le nez de l'utilisateur.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:

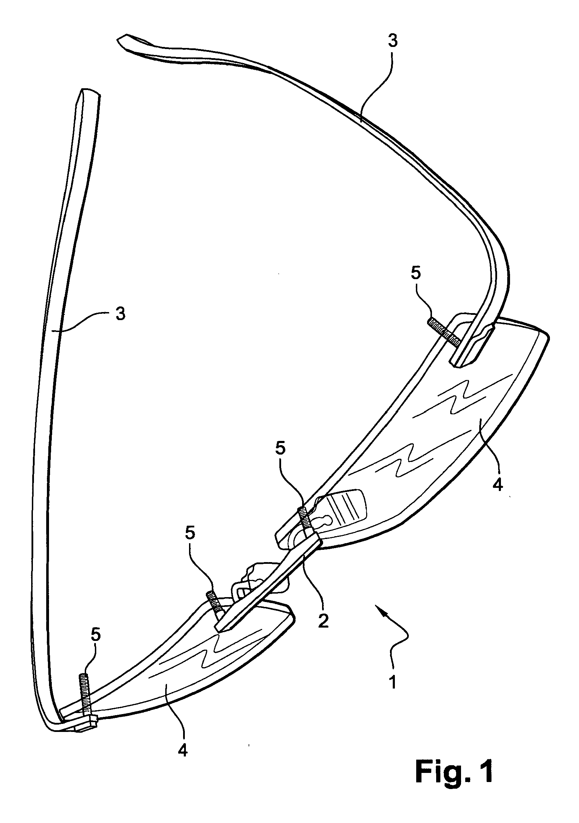

La figure 1 représente, en perspective, une paire de lunettes comportant un ensemble d'appui nasal selon l'invention.

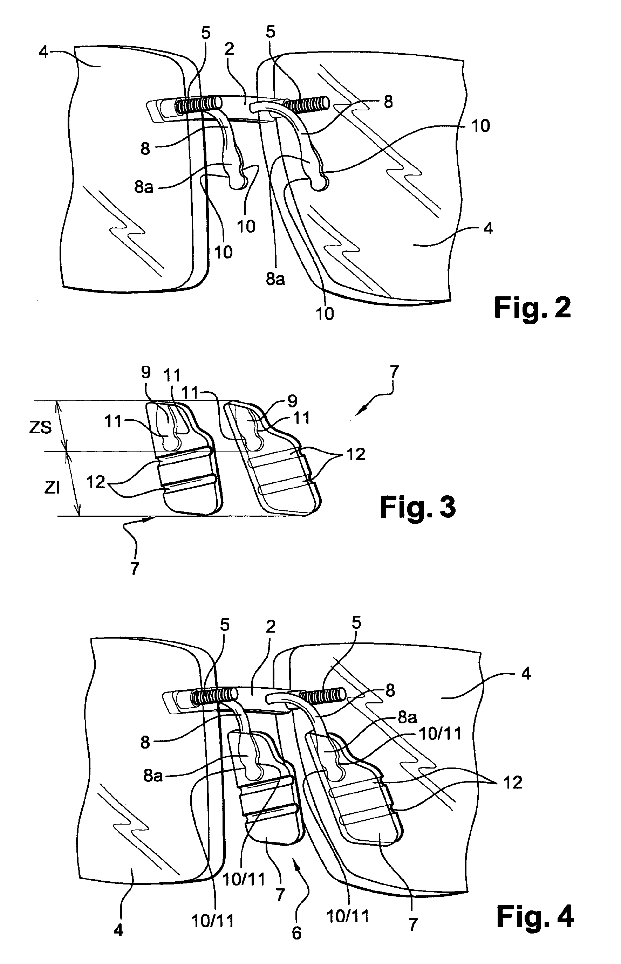

La figure 2 représente, en perspective, un bras porte-plaquette monté sur un pont nasal, selon un exemple d'adaptation, avant montage des plaquettes.
La figure 3 représente, en perspective, une paire de plaquettes destinées à être montées sur les portes-plaquettes selon la figure 2.
La figure 4 est une vue en perspective montrant un ensemble d'appui nasal, après montage définitif des plaquettes sur les portes-plaquettes prêts à être utilisés.

L'invention s'applique à tout type de lunettes 1 désignées globalement. En l'occurrence, il s'agit de lunettes percées, c'est-à-dire sans monture, dont le nez central 2 ainsi que les branches 3 sont montés directement sur les verres 4, par l'intermédiaire de vis 5.

Bien entendu, il pourra également s'agir de montures cerclées, et de lunettes optiques ou solaires.

Selon l'invention, la plaquette 7 est réalisée dans un matériau élastiquement déformable et se subdivise en deux zones dont l'une, supérieure « ZS », est destinée à recevoir une extrémité libre 8a du bras 8 porte-plaquette, pour assurer la fixation et la rigidification de ladite plaquette 7 dans cette zone, alors que son autre zone, inférieure « ZI », est libre de déformation élastique, apte à flotter librement tous azimuts, pour obtenir une auto-adaptation des plaquettes 7, quelle que soit la morphologie du nez de l'utilisateur, au contact de celui-ci.

Avantageusement, la fixation et la rigidification de la zone supérieure « ZS » de la plaquette 7 s'effectuent par l'intermédiaire de moyens d'ancrage, disposés d'une part dans un manchon 9 de la plaquette 7, et d'autre part à l'extrémité libre 8a du bras 8 porte-plaquette, de manière à coopérer réciproquement les uns avec les autres.

Selon le présent exemple de réalisation, les moyens d'ancrage sont constitués par au moins une réduction 10, réalisée à l'extrémité libre 8a du bras 8 porte-plaquette, et un bossage 11 sensiblement correspondant, réalisé à l'intérieur du manchon 9 de la plaquette 7, l'un rentrant dans l'autre par emmanchement par déformation élastique de la plaquette 7, ou inversement, lors de la dépose des plaquettes 7 en vue de les remplacer.

En l'occurrence, deux bossages 11 sont réalisés à l'intérieur du manchon 9 de la plaquette 7 et deux réductions 10 correspondantes sont réalisées à l'extrémité 8a des bras 8 portes-plaquettes.

Le serrage élastique devra être suffisant pour interdire tout glissement accidentel de la plaquette 7 par rapport au porte-plaquette 8.

En fait, le bras 8 porte-plaquette présente une rigidité suffisante pour un maintien dans le temps, mais autorise une déformation plastique permettant un réglage du positionnement des plaquettes 7.

Un tel assemblage devra être démontable, en appliquant une traction suffisante sur la plaquette. Mais il doit aussi assurer un maintien suffisant pour empêcher un démontage accidentel de la même plaquette 7 par rapport au bras 8 porte-plaquette.

On obtiendra ce résultat en choisissant, comme matériau constitutif de la plaquette 7, une matière plastique suffisamment rigide et en réalisant un manchon 9 de dimensions sensiblement correspondantes à celles de l'extrémité 8a du bras 8 porte-plaquette, tout en prévoyant que le matériau soit suffisamment souple pour subir des déformations élastiques en contact du nez de l'utilisateur.

C'est la raison pour laquelle la plaquette 7 est obtenue par injection ou formage de silicone, d'un PVC ou toutes autres matières, comme des élastomères type Santoprène™, SEBS, etc..

D'une manière générale, le matériau constitutif de la plaquette 7 pourra également être indifféremment thermoplastique ou thermodurcissable.

En ce qui concerne le bras 8 porte-plaquette, celui-ci est réalisé dans un matériau métallique ayant des caractéristiques de rigidité et de déformation plastique.

Les bras 8 pourront être réalisés par injection, frittage ou formage, mais préférentiellement en métal, tel qu'acier inoxydable, aluminium ou titane, ou tout autre alliage permettant d'avoir une rigidité et une déformation plastique.

Selon une autre caractéristique de l'invention, la plaquette 7 comporte, dans sa zone inférieure libre « ZI », sur la face opposée à celle en contact avec l'aile du nez de l'utilisateur, des stries 12 destinées à créer des lignes d'amincissement de l'épaisseur de la plaquette 7, de manière à augmenter leur pouvoir de déformation et d'adaptation.

Préférentiellement, les stries 12 des plaquettes 7 sont réalisées de manière parallèle entre elles, dans un sens sensiblement perpendiculaire à l'axe du manchon 9, destiné à recevoir l'extrémité libre 8a du bras 8 porte-plaquette.

Mais les stries 12 peuvent être également réalisées de manière oblique, de manière à être parallèles à l'angle du nez de l'utilisateur, pour un meilleur confort. Ceci permet d'aboutir à une conformation de la plaquette 7 correspondant à la forme du nez de l'utilisateur, tout en assurant un contact le plus large possible entre ladite plaquette 7 et le nez, en conservant une taille compacte.

Selon une variante de réalisation, l'ensemble d'appui nasal 6 qui vient d'être décrit est jumelé avec un autre ensemble d'appui nasal 6 identique, leurs bras 8 portes-plaquettes étant reliés entre eux par prolongement de leurs extrémités supérieures, pour former un pont nasal monobloc.

Selon une variante de réalisation, l'ensemble d'appui nasal 6 qui vient d'être décrit est jumelé avec un autre ensemble d'appui nasal 6 identique, leurs plaquettes 7 étant reliés entre elles par prolongement de leurs extrémités supérieures, pour former un pont nasal monobloc.

L'invention concerne également des lunettes 1 équipées de deux ensembles d'appui nasal tels qu'ils viennent d'être décrits.

## Revendications

1. Ensemble d'appui nasal (6) destiné à être fixé sur une zone centrale de lunettes (1), directement sur les verres optiques ou solaires (4), sur le pont (2) reliant les verres (4), ou sur une monture de cerclage de ceux-ci, chaque ensemble d'appui nasal (6), au nombre de deux, étant constitué par une plaquette (7), destinée à venir en contact avec une aile du nez d'un utilisateur et supportée par un bras (8) porte-plaquette relié aux lunettes (1), la plaquette (7) étant réalisée dans un matériau élastiquement déformable et se subdivisant en deux zones, l'une supérieure (ZS) et l'autre inférieure (ZI), la zone supérieure (ZS) étant destinée à recevoir une extrémité libre (8a) du bras (8) porte-plaquette, pour assurer la fixation et la rigidification de ladite plaquette (7) dans cette zone, la plaquette (7) étant **caractérisée en ce que** sa zone inférieure (ZI) comporte, sur la face opposée à celle en contact avec l'aile du nez de l'utilisateur, des stries (12) destinées à créer des lignes d'amincissement de l'épaisseur de la plaquette (7), de manière à la rendre libre de se déformer élastiquement et apte à flotter librement tous azimuts, pour obtenir une auto-adaptation des plaquettes (7), quelle que soit la morphologie du nez de l'utilisateur, au contact de celui-ci.

2. Ensemble selon la revendication 1, **caractérisé en ce que** la fixation et la rigidification de la zone supérieure (ZS) de la plaquette (7) s'effectuent par l'intermédiaire de moyens d'ancrage, disposés d'une part dans un manchon (9) de la plaquette (7), et d'autre part à l'extrémité libre (8a) du bras (8) porte-plaquette, de manière à coopérer réciproquement les uns avec les autres.

3. Ensemble selon la revendication 2, **caractérisé en ce que** les moyens d'ancrage sont constitués par au moins une réduction (10), réalisée à l'extrémité libre (8a) du bras (8) porte-plaquette, et un bossage (11) sensiblement correspondant, réalisé à l'intérieur du manchon (9) de la plaquette (7), l'un rentrant dans l'autre par emmanchement par déformation élastique de la plaquette (7), ou inversement, lors de la dépose des plaquettes (7) en vue de les remplacer.

4. Ensemble selon l'une des revendications 1 ou 2, **caractérisé en ce que** la plaquette (7) est réalisée en matière thermodurcissable.

5. Ensemble selon l'une des revendications 1 à 3, **caractérisé en ce que** la plaquette (7) est réalisée en matière thermoplastique.

6. Ensemble selon l'une des revendications 1 à 3, **caractérisé en ce que** le bras (8) porte-plaquette est réalisé dans un matériau métallique ayant des caractéristiques de rigidité et de déformation plastique.

7. Ensemble selon la revendication 1, **caractérisé en ce que** les stries (12) des plaquettes (7) sont réalisées de manière parallèle entre elles, dans un sens sensiblement perpendiculaire à l'axe du manchon (9), destiné à recevoir l'extrémité libre (8a) du bras (8) porte-plaquette.

8. Ensemble selon l'une des revendications 1 à 7, **caractérisé en ce qu'**il est jumelé avec un autre ensemble d'appui nasal (6) identique, leurs bras (8) portes-plaquettes étant reliés entre eux par prolongement de leurs extrémités supérieures, pour former un pont nasal monobloc.

9. Ensemble selon l'une des revendications 1 à 7, **caractérisé en ce qu'**il est jumelé avec un autre ensemble d'appui nasal (6) identique, leurs plaquettes (7) étant reliés entre elles par prolongement de leurs extrémités supérieures, pour former un pont nasal monobloc.

10. Lunettes comportant deux ensembles d'appui nasal selon l'une des revendications 1 à 9.

## Patentansprüche

1. Nasenhalterbaugruppe (6), die zur Befestigung in einem zentralen Bereich einer Brille (1) direkt an den optischen oder Sonnenschutzgläsern (4), auf der die Gläser (4) verbindenden Brücke (2) oder auf einer diese umgebenden Fassung bestimmt ist, wobei jede Nasenhalterbaugruppe (6) in der Anzahl von zwei von einem Steg (7) gebildet wird, der dazu bestimmt ist, mit einem Flügel der Nase eines Benutzers in Kontakt zu kommen und von einem mit der Brille (1) verbundenen Stegträgerarm (8) getragen wird, wobei der Steg (7) aus einem elastisch verformbaren Material hergestellt ist und sich in zwei Zonen, eine obere (ZS) und die andere untere (ZI), unterteilt, von denen die obere (ZS) dazu bestimmt ist, ein freies Ende (8a) des Stegträgerarms (8) zu empfangen, um die Befestigung und die Versteifung des Stegs (7) in dieser Zone sicherzustellen, wobei der Steg (7) **dadurch gekennzeichnet ist, dass** seine untere Zone (ZI) auf der Seite, die der gegenüberliegt, die mit dem Flügel der Nase des Benutzers im Kontakt ist, Rillen (12) aufweist, die dazu bestimmt sind, Verschlankungslinien der Dicke des Stegs (7) zu bilden, damit dieser die Freiheit hat, sich elastisch zu verformen und frei in alle Richtungen zu schwimmen, um unabhängig von der Morphologie der Nase des Benutzers im Kontakt mit derselben eine Selbstanpassung der Stege (7) zu erzielen.

2. Baugruppe nach Anspruch 1, **dadurch gekennzeichnet, dass** die Befestigung und die Versteifung der oberen Zone (ZS) des Stegs (7) mit Hilfe von Verankerungsmitteln erfolgt, die einerseits in einer Hülse (9) des Stegs (7) und andererseits am freien Ende (8a) des Stegträgerarms (8) derart angeordnet sind, dass sie gegenseitig miteinander zusammenarbeiten.

3. Baugruppe nach Anspruch 2, **dadurch gekennzeichnet, dass** die Verankerungsmittel von mindestens einer Reduzierung (10) gebildet werden, die am freien Ende (8a) des Stegträgerarms (8) ausgebildet sind, und von einer etwa entsprechenden Wulst (11), die in der Hülse (9) des Stegs (7) ausgebildet ist, wobei die eine in die andere durch elastische Verformung des Stegs (7) eingreift, oder umgekehrt, bei der Demontage der Stege (7), um diese zu ersetzen.

4. Baugruppe nach einem der Ansprüche 1 oder 2, **dadurch gekennzeichnet, dass** der Steg (7) aus Duroplastmaterial hergestellt ist.

5. Baugruppe nach einem der Ansprüche 1 bis 3, **dadurch gekennzeichnet, dass** der Steg (7) aus Thermoplastmaterial hergestellt ist.

6. Baugruppe nach einem der Ansprüche 1 bis 3, **dadurch gekennzeichnet, dass** der Stegträgerarm (8) aus einem metallischen Material mit plastischen Steifigkeits- und Verformungsmerkmalen hergestellt ist.

7. Baugruppe nach Anspruch 1, **dadurch gekennzeichnet, dass** die Rillen (12) der Stege (7) parallel zueinander in eine etwa lotrechte Richtung zur Achse der Hülse (9), die zum Empfang des freien Endes (8a) des Stegträgerarms (8) bestimmt ist, ausgebildet sind.

8. Baugruppe nach einem der Ansprüche 1 bis 7, **dadurch gekennzeichnet, dass** sie mit einer anderen identischen Nasenhalterbaugruppe (6) verpartnert ist, wobei ihre Stegträgerarme (8) durch Verlängerung ihrer oberen Enden miteinander verbunden sind, um eine Einblock-Nasenbrücke zu bilden.

9. Baugruppe nach einem der Ansprüche 1 bis 7, **dadurch gekennzeichnet, dass** sie mit einer anderen identischen Nasenhalterbaugruppe (6) verpartnert ist, wobei ihre Stege (7) durch Verlängerung ihrer oberen Enden miteinander verbunden sind, um eine Einblock-Nasenbrücke zu bilden.

10. Brille, die zwei Nasenhalterbaugruppen nach einem der Ansprüche 1 bis 9 aufweist.

## Claims

1. A nose bearing assembly (6) intended to be secured on a central area of spectacles (1), directly on optical or solar lenses (4), on the bridge (2) connecting the lenses (4), or on a rim frame of the latter, each nose bearing assembly (6), two in number, being formed by a pad (7) intended to come into contact with an ala of the nose of a user and supported by a pad-holding arm (8) connected to the spectacles (1), the pad (7) being made in an elastically deformable material and being subdivided into 2 areas, one upper area (ZS), and one lower area (ZI), the upper area (ZS) being intended for receiving a free end (8a) of the pad-holding arm (8), in order to ensure the securing and stiffening of said pad (7) in this area, the pad (7) being **characterized in that** its lower area (ZI) includes, on the face opposite to the one in contact with the ala of the nose of the user, striations (12) intended to generate thinning lines of the thickness of the pad (7), so as to make it free to deform elastically and able to freely float in all directions, in order to obtain self-adjustment of the pad (7), regardless of the morphology of the nose of the user, in contact therewith.

2. The assembly according to claim 1, **characterized in that** the securing and stiffening of the upper area (ZS) of the pad (7) are carried out via anchoring means, positioned in a sleeve (9) of the pad (7) on the one hand, and at the free end (8a) of the pad-holding arm (8) on the other hand, so as to mutually cooperate with each other.

3. The assembly according to claim 2, **characterized in that** the anchoring means are formed by at least one reduction (10), made at the free end (8a) of the pad-holding arm (8), and a substantially corresponding boss (11), made inside the sleeve (9) of the pad (7), one fitting into the other by force-fitting by elastic deformation of the pad (7) or conversely, during the removal of the pad (7) with view to replacing them.

4. The assembly according to one of claims 1 or 2, **characterized in that** the pad (7) is made in a thermosettable material.

5. The assembly according to one of claims 1 to 3, **characterized in that** the pad (7) is made in a form of thermoplastic material.

6. The assembly according to one of claims 1 to 3, **characterized in that** the pad-holding arm (8) is made in a metal material having a plastic deformation and stiffness characteristics.

7. The assembly according to claim 1, **characterized in that** the striations (12) of the pad (7) are made parallel with each other in a direction substantially perpendicular to the axis of the sleeve (9), intended to receive the free end (8a) of the pad-holding arm (8).

8. The assembly according to one of claims 1 to 7, **characterized in that** it is coupled with another identical nose bearing assembly (6), their pad-holding arms (8) being connected together by extension of their upper ends, in order to form a one-piece nose bridge.

9. The assembly according to one of claims 1 to 7, **characterized in that** it is coupled with another identical nose bearing assembly (6), their pad (7) being connected together by extension of their upper ends, in order to form a one-piece nose bridge.

10. A spectacle including two nose bearing assemblies according to one of claims 1 to 9.
